# EUROPÄISCHE PATENTSCHRIFT

(11) **EP 2 739 487 B1**
(45) Veröffentlichungstag und Bekanntmachung des Hinweises auf die Patenterteilung: **11.07.2018**
(21) Anmeldenummer: 12740595.9
(22) Anmeldetag: 27.07.2012
(51) Int. Cl.: B44C 5/04

(54) **VERFAHREN ZUR HERSTELLUNG EINER DEKORIERTEN WAND-, DECKEN- ODER FUSSBODENPLATTE**
METHOD FOR PRODUCING A DECORATED WALL, CEILING OR FLOOR PANEL
PROCÉDÉ DE FABRICATION D'UN PANNEAU DÉCORÉ MURAL, POUR PLAFOND OU PLANCHER

(30) Priorität: 02.08.2011 DE 102011080300
(43) Veröffentlichungstag der Anmeldung: 11.06.2014
(73) Patentinhaber: Surface Technologies GmbH & Co. KG, 15837 Baruth (DE)
(72) Erfinder: HOFF, Egon, 56869 Mastershausen (DE)
(74) Vertreter: Michalski Hüttermann & Partner Patentanwälte mbB
(86) Internationale Anmeldenummer: PCT/EP2012/064791
(87) Internationale Veröffentlichungsnummer: WO 2013/017543

(56) Entgegenhaltungen:
- EP-A1- 2 248 665
- EP-A2- 1 207 051
- EP-A2- 1 977 909
- WO-A1-00/20706
- DE-A1- 2 926 983
- DE-A1-102007 062 941

## Beschreibung

Die Erfindung betrifft ein Verfahren zur Herstellung einer dekorierten Wand-, Decken-oder Fußbodenplatte. Solche dekorierten Platten sind an sich bekannt. Sie bestehen üblicherweise aus einem Träger oder Kern aus einem festen Material, z.B. einem Holzwerkstoff, der auf mindestens einer Seite mit einer Dekorschicht und einer Deckschicht sowie gegebenenfalls mit weiteren Schichten, beispielsweise einer zwischen Dekor- und Deckschicht angeordneten Verschleißschicht, versehen ist. Die Dekorschicht ist üblicherweise ein gedrucktes Papier, das mit einem Aminoplastharz imprägniert ist. Auch die Deckschicht und die übrigen Schichten werden meist aus Aminoplastharz hergestellt. Unter Aminoplastharzen sind dabei Aminoharze oder Amidarze zu verstehen, welche zu duroplastischen Kunststoffen auf Basis von Melaminharzen ausgehärtet werden können.
Für den Einsatz in feuchten Räumen wie Bädern, Duschen usw. sind diese Platten oft nicht geeignet, weil insbesondere die Dekorschicht durch eindringende Feuchtigkeit verändert werden, beispielsweise quellen kann. Es besteht daher das Bedürfnis nach einer gattungsgemäßen Platte, deren Stabilität gegenüber Feuchtigkeit verbessert ist.
EP 2248665 A1 offenbart Dielen mit verbesserter Widerstandsfähigkeit gegen Feuchtigkeit. Diese weisen einen Kern aus einem thermoplastischen Material und eine auf der Oberfläche des Kerns befestigte Dekorschicht sowie eine Schutzschicht auf. Die Dekorschicht ist ein mit Aminoplastharz imprägniertes bedrucktes Papier und die Schutzschicht ein so genanntes Overlay-Papier, das ebenfalls mit Aminoplastharz getränkt ist und Verschleiß hemmende Teilchen enthalten kann. Alternativ kann das Dekor auch ohne Verwendung eines Papiers direkt auf dem thermoplastischen Kern oder auf eine thermoplastische Folie gedruckt werden. Dekorpapier oder Folie sind mit einem Kleber auf den thermoplastischen Kern aufgeklebt.

Die Herstellung einer solchen dekorierten Platte ist jedoch aufwändig, weil das imprägnierte Dekorpapier und Overlay-Papier gesondert hergestellt und bevorratet werden müssen. Dies gilt auch für die gegebenenfalls verwendete bedruckte thermoplastische Folie, die dazu noch relativ teuer ist.

DE 10 2007 062 941 A1 offenbart ein Verfahren zur Herstellung eines dekorierten Laminats mit einem plattenförmigen Kern aus Holz oder Holzwerkstoff, einer Dekorschicht auf mindestens einer Seite des Kerns und einer Deckschicht aus Aminoplast auf der Dekorschicht, umfassend die Schritte - Anbringen der Dekorschicht, - Auftragen einer Schicht aus einer wässrigen Lösung einer Aminoplast-Vorstufe zur Bildung einer Deckschicht auf die Dekorschicht, - zumindest teilweises Trocknen der Deckschicht, - Aushärten des Aminoplastes unter Druck und Wärme, wobei zunächst ein Teil der Lösung der Aminoplast-Vorstufe aufgetragen und die so erzeugte Teilschicht angetrocknet wird und dieser Schritt mindestens zweimal wiederholt wird, um die endgültige Deckschicht zu bilden.

Die Erfindung stellt sich demgemäß die Aufgabe, ein Verfahren anzugeben, mit dem sich eine wasserfeste dekorierte Wand-, Decken- oder Fußbodenplatte wesentlich einfacher und kostengünstiger und mit verbesserter Qualität herstellen lässt.

Diese Aufgabe wird gelöst durch ein Verfahren nach dem Hauptanspruch.

Es wurde nämlich festgestellt, dass sich ein auf den Kern geklebter Vliesstoff auch in diesem Zustand imprägnieren lässt. Durch die Wahl des Imprägnierungsmittels kann man dabei den Vliesstoff vollständig imprägnieren und somit völlig vor dem Einfluss von Feuchtigkeit schützen.

Als Kern eignen sich viele plattenförmige Materialien, die im Innenausbau Verwendung finden. Dazu gehören Kunststoffe, insbesondere thermoplastische, elastomere oder duroplastische Kunststoffe, Papier (nicht erfindungsgemäß), Pappe(nicht erfindungsgemäß), aber auch Platten aus Mineralien wie natürliche und künstliche Steinplatten (nicht erfindungsgemäß), Betonplatten (nicht erfindungsgemäß), Gipsfaserplatten (nicht erfindungsgemäß), so genannte WPC-Platten (aus einem Gemisch von Kunststoff und Holz), sowie Platten aus natürlichen Rohstoffen wie Kork und Holz (nicht erfindungsgemäß). Auch Platten aus Biomasse wie Stroh, Maisstroh, Bambus, Laub, Algenextrakte, Hanf, Ölpalmenfasern, können verwendet werden (nicht erfindungsgemäß). Des Weiteren sind Recyclingwerkstoffe aus den genannten Materialien brauchbar.
Das Trägerplattenmaterial kann - je nach den gewünschten physikalischen Eigenschaften der fertigen Platte - massiv dicht sein oder mehr oder weniger große Hohlräume aufweisen, z.B. aufgeschäumt sein oder Hohlräume aufweisen, deren Größe in der Größenordnung der Plattenabmessungen liegt. Auch Schichtstrukturen aus mehreren der genannten Materialien können verwendet werden, beispielsweise Gipskarton- oder Holz-Kunststoff-Schichtplatten.
Bevorzugt als Plattenmaterial sind thermoplastische Kunststoffe, wie Polyvinylchlorid, Polyolefine (beispielsweise Polyethylen (PE), Polypropylen (PP)), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser.
Die Kunststoffe können übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.
Des Weiteren können die Kunststoffe Weichmacher enthalten, um die Festigkeit des Produkts in gewünschter Weise zu beeinflussen. Ebenso können weitere Additive, wie beispielsweise Photostabilisatoren, enthalten sein. Diese thermoplastischen Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Der erfindungsgemäß verwendete Vliesstoff ist ein Druckbasispapier. Andere Vliese, beispielsweise aus Kunstfasern wie Polyamid oder Polyester lassen sich ebenfalls (nicht erfindungsgemäß) verwenden. Geeignete Vliesstoffe haben ein Flächengewicht von ≥10 bis ≤200 g pro Quadratmeter und ein Porenvolumen von ≥10 bis ≤60%.

Im Gegensatz zur weit verbreiteten Technik ist der erfindungsgemäß verwendete Vliesstoff nicht imprägniert. Daher weist es seine volle Flexibilität auf und wird beim Biegen nicht beschädigt. Erfindungsgemäß ist der Vliesstoff ein so genanntes Druckbasispapier. Solche Papiere sind handelsüblich und werden beispielsweise für die Herstellung von bedrucktem Dekorpapier verwendet. Sie können eingefärbt sein. Das Flächengewicht dieser Papiere liegt geeignet zwischen ≥20 und ≤150 g pro Quadratzentimeter.

Die erfindungsgemäß verwendeten Klebstoffe sind Schmelzkleber, insbesondere auf der Basis von Polyurethanen. Besonders bevorzugt sind reaktive Schmelzklebstoffe. Diese werden im geschmolzenen Zustand mit Temperaturen von beispielsweise ≥110 bis ≤200°C, bevorzugt bis 130 °C, auf die erste Oberfläche des Trägers oder auf eine Fläche des Vliesstoffs aufgetragen. Unmittelbar nach dem Auftragen wird der Vliesstoff auf die erste Oberfläche des Trägers aufgelegt, wobei die Verklebung des Vliesstoffs mit dem Träger durch Abkühlen und Verfestigen des Schmelzklebers erfolgt. Zur Führung und Glättung kann dabei der Vliesstoff mit einer Kaschierwalze, beispielsweise eine Gummikalanderwalze, an die Trägeroberfläche angedrückt werden. Geeignete Schmelzklebstoffe enthalten Polyurethane. Solche reaktive Schmelzklebstoffe sind beispielsweise in EP777695B2 beschrieben. Grundsätzlich verwendbar sind auch Reaktionsklebstoffe mit zwei Komponenten, jedoch ist die Handhabung hier aufwändiger, weil die Zeit vom Mischen bis zum Kaschieren und auch die Temperatur konstant eingehalten werden muss. Brauchbar sind auch einfache Schmelzklebstoffe (Hotmelts). Weiterhin eignen sich (nicht erfindungsgemäß) kalt abbindende Ein-, Zwei- oder Mehrkomponenten-Klebstoffe sowie Dispersionskleber (Weißleim) oder Kaltleime, die auch bis zu einer Temperatur von 80 Grad Celsius verpress- bzw. einsetzbar sind.
Das Auftragen des Klebers erfolgt beispielsweise mittels einer vorzugsweise beheizten Auftragswalze auf die Oberfläche des Trägers. Bei der Verwendung eines thermoplastischen Trägers ist darauf zu achten, dass dieser nicht so weit erwärmt wird, dass er erweicht. Möglichst rasch nach dem Auftragen des Klebers wird dann der Vliesstoff (Druckbasispapier) auf die Schmelzkleberschicht aufgelegt. Bei Verwendung eines reaktiven Schmelzklebstoffs (RAPIDEX NP2075LT, H.B. Fuller Deutschland GmbH, Nienburg) lag die geeignete Temperatur des Klebers bei 120°C und der Flächenauftrag bei 55 g pro Quadratmeter.
Alternativ kann der Schmelzklebstoff auf eine Oberfläche des Vliesstoffs aufgetragen werden. Grundsätzlich kann dies auch mittels einer Auftragswalze erfolgen, wenn der Vliesstoff dabei gestützt wird, beispielsweise von einer Walze. Bevorzugt wird aber in diesem Fall der geschmolzene Schmelzklebstoff mittels eines Düsensystems auf den Vliesstoff aufgesprüht.

Dieses Verfahren erlaubt im Vergleich mit dem Walzenauftrag auf den Träger einen schnelleren Durchsatz. Geeignete Temperaturen des Schmelzklebers im Düsensystem liegen zwischen ≥120 und ≤200°C, insbesondere ≥120 bis ≤150°C. Mit diesem Verfahren kann grundsätzlich auch die erste Oberfläche des Trägers mit Schmelzkleber beschichtet werden, bevor der Vliesstoff aufkaschiert wird.
Die Menge des Schmelzklebers und die Prozessparameter wie Temperatur, Durchsatz, Zeit vom Auftragen bis zum auf Kaschieren sind bevorzugt so zu wählen, dass der Vliesstoff nicht vom flüssigen Schmelzkleber durchtränkt wird. Vorzugsweise wird angestrebt, dass die Poren des Vliesstoffs offen bleiben und nicht vom Schmelzklebers gefüllt werden.
Nach dem Aufkaschieren des Vliesstoffs (Papiers) auf die Trägeroberfläche kann dieser Verbund als Zwischenprodukt beliebig lange gelagert werden. Da das Druckbasispapier noch kein Dekor aufweist, kann nunmehr auf seine frei liegende Oberfläche ein Dekor aufgedruckt werden. Hierzu können bekannte Druckverfahren dienen, wie beispielsweise Tiefdruck, Offsetdruck, Hochdruck, Tintenstrahldruck, Laserdruck, Digitaldruck, Transferdruck, sowohl als Bogen- wie als Rotationsverfahren. Es kann sowohl einfarbig als auch mehrfarbig gedruckt werden. Es wurde festgestellt, dass die mit dem Vliesstoff kaschierte Oberfläche des Trägers für den Druck viel besser geeignet ist als die Oberfläche des Trägers selbst. Insbesondere ist die Haftung der Druckfarbe verbessert.
Im nächsten Verfahrensschritt wird der Vliesstoff mit einem flüssigen Mittel imprägniert. Das Imprägnierungsmittel besteht bevorzugt aus einer Komponente. Brauchbar sind auch Mittel aus zwei Komponenten, die nacheinander auf den Vliesstoff aufgetragen werden. Dabei wird zunächst die Faserstruktur des Vlieses mit einer Komponente benetzt, ohne sie vollständig zu tranken. Danach wird die zweite Komponente aufgetragen und es kommt dabei zur Durchmischung beider Bestandteile, so dass eine Aushärtung durch Vernetzung stattfindet. Die Komponenten des Systems können auch vor dem Aufragen miteinander vermischt werden. Erfindungsgemäß ist dieses System strahlungsempfindlich, so dass die Vernetzung durch elektromagnetische Bestrahlung, beispielsweise mit UV-Strahlung, IR-Strahlung, NIR-Strahlung (Nahinfrarot) oder Elektronenstrahlen, beschleunigt werden kann. Es sind aber auch durch Wärme aushärtbare Imprägniermittel verwendbar (nicht erfindungsgemäß). Wird anstelle eines noch nicht bedruckten Vliesstoffes ein bereits mit einem gewünschten Dekor versehener Vliesstoff eingesetzt, so kann dieser auch zumindest teilweise Imprägniert sein, bevor er auf die Trägerplatte aufkaschiert wird (nicht erfindungsgemäß).
Eine bevorzugte Klasse von Imprägnierungsmitteln, die durch Strahlung vernetzbar sind, enthält ungesättigte Polyester- und Epoxyacrylate sowie geeignete, an sich bekannte Photoinitiatoren. Der Auftrag des Imprägnierungsmittels beziehungsweise seiner Komponenten erfolgt zum Beispiel durch Aufsprühen, dosierende Walzen, oder Gießen und Spachteln. Das Auftragsgewicht richtet sich nach der Art der Vliesschicht, insbesondere ihrem Porenvolumen. Vorteilhaft trägt man eine zur vollständigen Durchtränkung der Vliesschicht ausreichende Menge auf. Vorteilhaft erfolgt das Auftragen und Einarbeiten des Imprägnierungsmittels unter Zuhilfenahme einer Walze, an deren Oberfläche sich eine Schicht aus Elastomer oder Gummi mit einer Shore-Härte (A) von ≥20 bis ≤40, bevorzugt ≥30, befindet, und die etwa ≥20 bis ≤100 mm breiter als die zu bearbeitende und mit dem Vliesstoff versehene Platte ist.
Diese Walze kann selbst das Imprägnierungsmittel dosieren oder sie kann einer anderen Auftragsvorrichtung nachgeordnet sein. Diese Walze wird mit einem solchen Druck beaufschlagt, dass sie sich an den Kanten der Platte ein wenig in Richtung auf seitlichen Rand der Platte und des Vliesstoffs verformt. Dies führt zu einer satteren Durchtränkung des Vlieses an den Rändern, wodurch die Wasserfestigkeit des Produkts von den Rändern her verbessert wird.

Wenn ein durch UV-Strahlung vernetzbares Imprägnierungsmittel gewählt wurde, erfolgt nun eine Bestrahlung mit Strahlung geeigneter Wellenlänge. Diese Bestrahlung kann bei Zimmertemperatur oder leicht erhöhter Temperatur, beispielsweise bis zu 60°C, erfolgen. Entsprechend wird ein durch Elektronenstrahlen vernetzbares Imprägnierungsmittel nun einer Elektronenstrahlung ausgesetzt.

Durch die Vernetzung und Aushärtung des Imprägnierungsmittels kommt es zur Bildung einer sehr festen Dekorschicht auf dem Träger. Es war für den Fachmann überraschend, dass das Imprägnierungsmittel die bereits mit einer Oberfläche auf den Träger geklebte Vliesschicht gleichfalls so ausreichend durchtränkt wie es beim Imprägnieren des isolierten Dekorpapiers der Fall ist, selbst wenn die freie Oberfläche bereits bedruckt ist. Offenbar stellt die Druckfarbe überraschenderweise kein Hindernis für das Imprägnierungsmittel dar.

Als Verschleißschicht wird eine Zusammensetzung aufgetragen, die bevorzugt mit dem ausgehärteten Imprägnierungsmittel kompatibel ist, das heißt, dass sie an der imprägnierten Dekorschicht gut haftet. Man kann auch hier ein durch Strahlung vernetzbares System aus zwei Komponenten anwenden. Bevorzugt werden Einkomponentensysteme.

In die Verschleißschicht inkorporiert werden Bestandteile, welche die Abriebfestigkeit erhöhen. Hierfür kommen Teilchen harter anorganischer Feststoffe infrage, wie Aluminiumoxid (Korund), Siliziumdioxid (Quarz), Borkarbid, Glasperlen und ähnliche. Die Mohs-Härte dieser Stoffe sollte mindestens 6 betragen. Ihre Teilchengröße ist so zu bemessen, dass sie die Dicke der Verschleißschicht nicht überschreiten. Geeignete Teilchengrößen liegen zwischen ≥20 und ≤200 µm. Im Fall eines durch Strahlung vernetzbaren Systems muss selbstverständlich wiederum eine Bestrahlung mit UV-Strahlung geeigneter Wellenlänge bzw. Elektronenstrahlen erfolgen.

Zum Inkorporieren der erwähnten harten Teilchen können diese der für die Herstellung der Verschleißschicht bestimmten Zusammensetzung vor dem Auftragen auf die imprägnierte Vliesschicht beigemischt werden. Alternativ ist es möglich, eine flüssige Zusammensetzung ohne Teilchen aufzutragen und letztere danach aufzubringen, z. B. aufzustreuen, sodass sie in die Schicht einsinken.

Ein bevorzugtes Einkomponentensystem für die Herstellung der Verschleißschicht umfasst Epoxyacrylate und Photoinitiatoren als vernetzbare Komponenten sowie Korund als abriebhemmenden Feststoffzusatz.

Vorteilhaft wird die Verschleißschicht in mindestens zwei Teilschichten aufgetragen, bei denen der Zusatz der harten Teilchen unterschiedlich sein kann. Beispielsweise wird die erste untere Verschleißschicht mit größeren Teilchen und eine zweite obere Teilschichten mit kleineren Teilchen, gegebenenfalls auch in geringerer Menge, versehen. Dadurch lässt sich vermeiden, dass einzelne Teilchen aus der Oberfläche der oberen Teilschicht hervorragen.

Auf die Verschleißschicht kann noch eine Deckschicht aufgetragen werden, beispielsweise um das Aussehen des fertigen Produkts zu verbessern. Auch diese Deckschicht kann aus einer durch Strahlung vernetzbaren Zusammensetzung bestehen. In diesem Fall folgt wiederum eine Bestrahlung mit UV-Licht geeigneter Wellenlänge. Die Deckschicht hat vorzugsweise eine Dicke von 5 bis 50 µm und enthält vorzugsweise keine die Abriebfestigkeit erhöhenden Teilchen.

Die Zusammensetzung für die Herstellung der Deckschicht umfasst bevorzugt Polyesteracrylat, Epoxyacrylat und mindestens einen Photoinitiator.

In die Deckschicht kann mit Hilfe einer strukturierten Oberfläche, beispielsweise einer Strukturwalze oder eines Prägeblechs, eine Oberflächenstruktur eingeprägt werden, um der Oberfläche eine gewisse Tiefe und Rauheit zu geben. Es ist auch möglich, dass diese Struktur mit den Details des Dekors in Übereinstimmung gebracht wird, um den Eindruck eines natürlichen Werkstoffes wie Holz hervorzurufen.

Es kann vorteilhaft sein, wenn die Schichten aus den durch Strahlung vernetzbaren Zusammensetzungen in den einzelnen Verfahrensstufen nicht so lange bestrahlt werden, bis sie vollständig ausgehärtet sind. In diesem Fall wird nach dem Auftragen der letzten Schicht bzw. dem Prägen der Deckschicht noch eine Schlussbestrahlung zur vollständigen Aushärtung durchgeführt.

Je nach dem Verwendungszweck des Produkts kann auch entweder die Verschleißschicht oder die Deckschicht weggelassen werden. So kann z. B. bei Platten für die Anbringung an Wänden oder Decken eine Verschleißschicht entbehrlich sein, weil hier nur geringe mechanische Belastung zu erwarten ist. Ebenso kann die Deckschicht wegfallen, wenn es nur auf Verschleißfestigkeit und nicht auf das Aussehen ankommt.
Alternativ zur Verwendung von Zusammensetzungen, die durch Strahlung aushärtbar sind, für die Imprägnierung des aufgeklebten Vliesstoffs, die Verschleißschicht und die Deckschicht können auch Zusammensetzungen verwendet werden, bei denen eine Vernetzung und Aushärtung durch Erwärmen, gegebenenfalls unter Druck, möglich ist(nicht erfindungsgemäß). Es hat sich jedoch als vorteilhaft erwiesen, für die drei Schichten jeweils den gleichen Typ - entweder durch Strahlung oder durch Wärme vernetzbar - zu Verwenden.
Die beschriebenen Arbeitsgänge zum Herstellen der erfindungsgemäßen dekorierten Wand-, Decken- oder Fußbodenplatten können rationell mit großen Formaten, beispielsweise 1 mal 3 m, oder sogar im kontinuierlichen Betrieb, wenn die Trägerplatte kontinuierlich bereitgestellt werden kann, durchgeführt werden. Üblicherweise werden aber die so hergestellten Platten in kleineren Formaten als Paneele oder Dielen eingebaut, so dass die großen Formate aufgetrennt werden müssen. Das Trennen der großen Formate kann grundsätzlich an einer beliebigen Stelle des Verfahrens eingeschoben werden. Bevorzugt erfolgt es nach dem Kaschieren und vor dem Imprägnieren des Vliesstoffs oder nach Fertigstellung des Produkts. Wird das Produkt vor dem Imprägnieren getrennt, dann kann man gleichzeitig mit oder unabhängig vom Auftragen der Imprägnierung und/oder der Verschleiß- und Deckschicht die Seitenflächen der Teilplatten wasserfest versiegeln, beispielsweise mittels der Imprägnierflüssigkeit, und man erhält Platten, die sich wie keramische Fliesen verarbeiten lassen. Nach dem Trennen können auch ggf. die gewünschten Verbindungssysteme angebracht werden. Wenn ein unbedrucktes Druckbasispapier auf den Träger kaschiert wurde, kann danach getrennt werden und die einzelnen Paneele oder Dielen jeweils mit verschiedenen Mustern bedruckt werden, wodurch eine hohe Flexibilität der Produktion erreicht wird. Außerdem können bei rechnergesteuerten Druckverfahren ohne eine feste Druckform, beispielsweise Tintenstrahl- oder Laserdruck, auf einfache Weise leicht unterschiedliche Muster erzeugt werden, wodurch der Eindruck natürlicher Materialien hervorgerufen wird.

Die zweite Oberfläche des Trägers, also die der mit erfindungsgemäßen Verfahren behandelten Oberfläche gegenüberliegende Fläche des Trägers, lässt sich grundsätzlich mit demselben Verfahren zu einer dekorativen Oberfläche verarbeiten. In vielen Fällen ist im Einbauzustand nur eine dekorierte Oberfläche sichtbar. Um jedoch die Planlage des Produkts unter wechselnden Temperatur- und
Feuchtigkeitsbedingungen sicherzustellen, kann auf der zweiten Oberfläche des Trägers ein so genannter Gegenzug angebracht werden. Dieser Gegenzug kann ebenfalls nach dem erfindungsgemäßen Verfahren hergestellt werden, wobei auf das Dekor verzichtet werden kann und ein einfacherer Vliesstoff und kostengünstigere Zusammensetzungen für die Imprägnierung verwendet werden können. Man erhält dann eine Platte, die auch auf der zweiten Seite wasserfest ist. Hierzu kann es ausreichend sein, auf das Kaschieren eines Vliesstoffes zu verzichten und nur eine geeignete Zusammensetzung, z. B. eine Imprägniermittel- oder Deckschichtzusammensetzung aufzutragen. Der Gegenzug kann vorteilhaft vor oder nach dem Kaschieren der ersten Seite und vor dem Trennen der Platte in kleinere Formate angebracht werden.

Mit dem erfindungsgemäßen Verfahren lassen sich dekorierte Wand-, Decken- und Fußbodenplatten von hervorragender Qualität auf sehr viel einfachere Weise als nach dem Stand der Technik herstellen. Durch das Kaschieren mit Hilfe eines Klebstoffes kann die Haftung der Dekorschicht und der darüber angeordneten Schichten am Träger unabhängig von der Art des Trägers und der Zusammensetzungen der Imprägnierung eingestellt werden. Dadurch werden früher beobachtete Probleme der Haftung von Aminoplastharzen auf polymeren Kunststoffen wie PVC überwunden.

Es versteht sich für den Fachmann, dass die Erfindung jedoch auch mit einem Kleber im Temperaturbereich von ≥60 bis zu ≤110 °C realisierbar ist. Dabei kommen vorzugsweise Kleber auf der Basis von Polyurethanen zur Anwendung, die je nach Anwendungsfall Stoffe mit niedrigerem Schmelzpunkt, vorzugsweise Harze, beigemischt werden. Eine andere Alternative umfasst Kleber aus einer Zusammensetzung aus Polymeren, Wachsen, Ölen, Harzen, Stabilisatoren und Weichmachern.

Die Erfindung wird anhand des folgenden Ausführungsbeispiels näher erläutert

Eine Platte aus Weich-PVC von 1 mal 3 m wird in einer Walzenbeschichtungsanlage mit einer auf 120°C temperierten Auftragswalze mit einem reaktiven Schmelzkleber (55 g pro Quadratmeter) beschichtet. So bald wie möglich wird auf den noch flüssigen Kleber ein Druckbasispapier aufgelegt und mittels einer Gummikalanderwalze und einer Gegendruckwalze angedrückt. Nach dem Abkühlen wird in einer Vierfarben-Druckmaschine das Bild eines Holzfurniers auf die Oberfläche aufgedruckt. In diesem Zustand kann die Platte als Halbfertigprodukt beliebig lange gelagert werden.

Nun wird die Platte in 25 x 60 cm große Dielen aufgetrennt und mittels einer gummierten Walze, deren obere Schicht eine Shore(A)-Härte von ≥30 aufweist und die etwas breiter als die Dielen ist, ein UV-härtbares Imprägniermittel mit Polyesteracrylat und Epoxyacrylat mit einem Flächengewicht von 25 g/m² aufgetragen und mit UV bestrahlt.

Danach wird eine UV-härtbare Zusammensetzung, die einen Anteil von etwa 20 Gew.-% Korund (mittlere Teilchengröße 25 pm) enthält, mittels einer Walze zu einem Flächengewicht von 30 g/m2 aufgetragen und mit UV-Strahlung leicht angeliert, also teilweise gehärtet. Dieser Vorgang wird einmal wiederholt.

Schließlich wird noch eine Deckschicht aus einem UV-härtbaren Lack mit Polyester- und Epoxyacrylat zu einem Flächengewicht von 7 g/m2 aufgetragen.

Der ganze Schichtverbund wir nun nochmals mit UV bestrahlt, bis eine hinreichende Aushärtung erreicht ist.

Man erhält Dielen, die nach Versiegelung der Seitenkanten und der Unterseite völlig wasserfest sind.

## Patentansprüche

1. Verfahren zur Herstellung einer dekorierten Wand-, Decken-oder Fußbodenplatte, umfassend die Schritte
a) Bereitstellen eines plattenförmigen Trägers und eines Vliesstoffs,
b) Auftragen eines Klebstoffs auf eine Oberfläche des Trägers oder auf eine Oberfläche des Vliesstoffs,
c) Kaschieren des Vliesstoffes mittels des aufgetragenen Klebstoffs auf die Oberfläche des Trägers,
d) Imprägnieren des Vliesstoffes mit einem aushärtbaren Imprägniermittel,
e) Aushärten des Imprägniermittel,
wobei der Vliesstoff ein Druckbasispapier ist und zwischen den Schritten c) und d) ein Dekor auf das Papier gedruckt wird, **dadurch gekennzeichnet, dass** der Träger ein Kunststoffträger ist und dass der Klebstoff ein Schmelzkleber ist und dass das Imprägniermittel strahlungsvernetzbare Komponenten umfassen und das Aushärten mittels elektromagnetischer Strahlung erfolgt.

2. Verfahren nach Anspruch 1, umfassend die zusätzlichen Verfahrensschritte
f) Auftragen einer Verschleißschicht und Aushärten der Verschleißschicht und/oder
g) Auftragen einer Deckschicht und Aushärten der Deckschicht umfasst.

3. Verfahren nach Anspruch 1, **dadurch gekennzeichnet, dass** der Schmelzkleber ein reaktiver Schmelzkleber ist.

4. Verfahren nach Anspruch 2, **dadurch gekennzeichnet, dass** die Zusammensetzung für die Herstellung der Verschleißschicht und/oder die Zusammensetzung für die Herstellung der Deckschicht strahlungsvernetzbare Komponenten umfassen und das Aushärten jeweils mittels elektromagnetischer Strahlung erfolgt.

5. Verfahren nach einem der vorangehenden Ansprüche, **dadurch gekennzeichnet, dass** das Imprägniermittel aus mindestens zwei Komponenten besteht, die nacheinander auf das Papier aufgetragen oder vor dem Auftragen miteinander vermischt werden.

6. Verfahren nach Anspruch 2, **dadurch gekennzeichnet, dass** zumindest eine der Zusammensetzungen für das Imprägniermittel, die Verschleißschicht oder die Deckschicht zumindest ein Polyesteracrylat, ein Epoxyacrylat und einen Photoinitiator umfasst.

7. Verfahren nach Anspruch 2, **dadurch gekennzeichnet, dass** die Zusammensetzung für die Herstellung der Verschleißschicht Teilchen eines Feststoffs mit einer Mohs-Härte von mindestens 6 umfasst.

8. Verfahren nach einem der vorangehenden Ansprüche, **dadurch gekennzeichnet, dass** der Auftrag des Imprägnierungsmittels mittels einer Gummiwalze erfolgt, deren Oberfläche eine Shore(A)-Härte von 20 bis 40 aufweist und den plattenförmigen Träger in Richtung der Walzenachse um mindestens 20 mm überragt.

9. Verfahren nach einem der vorangehenden Ansprüche, **dadurch gekennzeichnet, dass** die plattenförmigen Träger zwischen den Schritten c) und d) getrennt werden, wobei man Platten mit den Abmessungen des Endprodukts oder einer Zwischengröße erhält, und dass die Platten an den Seitenflächen wasserfest versiegelt werden.

## Claims

1. Method for producing a decorated wall, ceiling or floor panel, comprising the steps:
a) providing a plate-shaped carrier and a non-woven fabric;
b) applying an adhesive onto a surface of the carrier or onto a surface of the non-woven fabric;
c) laminating the non-woven fabric on the surface of the carrier by means of the applied adhesive;
d) impregnating the non-woven fabric with a curable impregnating agent;
e) curing the impregnating agent,
wherein the non-woven fabric is a printing base paper and a decoration is printed onto the paper between steps c) and d);
**characterized in that**
the carrier is a plastic carrier and the adhesive is a hot melt adhesive and the impregnating agent comprises radiation-crosslinkable components and the curing takes place by means of electromagnetic radiation.

2. Method according to claim 1, comprising the additional steps:
f) applying a wearing layer and curing the wearing layer; and/or
g) applying a cover layer and curing the cover layer.

3. Method according to claim 1, **characterized in that** the hot melt adhesive is a reactive hot melt adhesive.

4. Method according to claim 2, **characterized in that** the composition for producing the wearing layer and/or the composition for producing the cover layer comprise radiation-crosslinkable components and the curing takes place respectively by means of electromagnetic radiation.

5. Method according to any one of the preceding claims, **characterized in that** the impregnating agent consists of at least two components which are successively applied onto the paper or are mixed together before being applied.

6. Method according to claim 2, **characterized in that** at least one of the compositions for the impregnating agent, the wearing layer or the cover layer comprises at least one polyester acrylate, an epoxy acrylate and a photoinitiator.

7. Method according to claim 2, **characterized in that** the composition for producing the wearing layer comprises particles of a solid having a Mohs hardness of at least 6.

8. Method according to any one of the preceding claims, **characterized in that** the application of the impregnating agent takes place by means of a rubber roller, whose surface has a Shore (A) hardness of 20 to 40 and projects at least 20 mm beyond the plate-shaped carrier in the direction of the roller axis.

9. Method according to any one of the preceding claims, **characterized in that** the plate-shaped carriers are separated between steps c) and d), wherein plates with the dimensions of the final product or an intermediate size are obtained, and that the plates are waterproof sealed at the side surfaces.

## Revendications

1. Procédé de fabrication d'un panneau mural, de plafond ou de sol, décoré, comprenant les étapes
a) de mise à disposition d'un support en forme de panneau et d'un non-tissé,
b) d'application d'un adhésif sur une surface du support ou sur une surface du non-tissé,
c) de masquage du non-tissé au moyen de l'adhésif appliqué sur la surface du support,
d) d'imprégnation du non-tissé avec un produit d'imprégnation durcissable,
e) de durcissement du produit d'imprégnation,
où le non-tissé est un papier de base d'impression et entre les étapes c) et d), un décor est imprimé sur le papier,
**caractérisé en ce que** le support est un support à base de matière plastique et l'adhésif est un adhésif fusible et que le produit d'imprégnation comprend des composants réticulables sous un rayonnement et que le durcissement a lieu au moyen du rayonnement électromagnétique.

2. Procédé selon la revendication 1, comprenant les étapes de procédé complémentaires
f) d'application d'une couche de protection anti-usure et de durcissement de la couche de protection anti-usure et/ou
g) d'application d'une couche de revêtement et de durcissement de la couche de revêtement.

3. Procédé selon la revendication 1, **caractérisé en ce que** l'adhésif fusible est un adhésif fusible réactif.

4. Procédé selon la revendication 2, **caractérisé en ce que** la composition destinée à la fabrication de la couche anti-usure et/ou la composition destinée à la fabrication de la couche de revêtement comprennent des composants réticulables par rayonnement et que le durcissement a lieu respectivement au moyen d'un rayonnement électromagnétique.

5. Procédé selon l'une des revendications précédentes, **caractérisé en ce que** le produit d'imprégnation est constitué d'au moins deux composants qui sont appliqués l'un après l'autre sur le papier ou sont mélangés ensemble avant l'application.

6. Procédé selon la revendication 2, **caractérisé en ce qu'**au moins l'une des compositions destinée au produit d'imprégnation, à la couche de protection anti-usure ou à la couche de revêtement comprend au moins un polyester acrylate, un époxy acrylate et un photoinitiateur.

7. Procédé selon la revendication 2, **caractérisé en ce que** la composition destinée à la fabrication de la couche de protection anti-usure comprend des particules d'un solide doté d'une dureté de Mohs d'au moins 6.

8. Procédé selon l'une des revendications précédentes, **caractérisé en ce que** l'application du produit d'imprégnation a lieu au moyen d'un rouleau en caoutchouc, dont la surface présente une dureté Shore A de 20 à 40 et que le support en forme de panneau dépasse d'au moins 20 mm en direction de l'axe du rouleau.

9. Procédé selon l'une des revendications précédentes, **caractérisé en ce que** les supports en forme de panneaux sont séparés entre les étapes c) et d), ce par quoi on obtient des panneaux avec les dimensions du produit fini ou avec une dimension intermédiaire et que les panneaux sont scellés de manière étanche à l'eau au niveau des surfaces latérales.
